# EUROPEAN PATENT APPLICATION

(11) **EP 4 850 849 A1**
(43) Date of publication of application: **09.12.2026**
(21) Application number: 24922163.1
(22) Date of filing: 02.02.2024
(51) Int. Cl.: B23K 26/38

(54) **LASER MACHINING METHOD, SUBSTRATE MANUFACTURING METHOD, AND LASER MACHINING DEVICE**

(71) Applicant: Shin-Etsu Engineering Co., Ltd., Tokyo 101-0054 (JP)
(72) Inventor: OHTANI, Yoshikazu, Annaka-shi, Gunma 379-0127 (JP); TOMIOKA, Kyouhei, Annaka-shi, Gunma 379-0127 (JP); SUZUKI, Tomoya, Annaka-shi, Gunma 379-0127 (JP); YAMAOKA, Hiroshi, Yokohama-shi, Kanagawa 234-0053 (JP); USAMI, Taketo, Yokohama-shi, Kanagawa 234-0053 (JP); KURATA, Masami, Yokohama-shi, Kanagawa 234-0053 (JP)
(74) Representative: Meissner Bolte Partnerschaft mbB
(86) International application number: PCT/JP2024/003536
(87) International publication number: WO 2025/163904

(57) **Abstract**

The present invention provides a laser processing method for forming a recess and/or a through-hole in a workpiece using a laser, the laser processing method including: irradiating the workpiece with a laser having an optical axis inclined with respect to a normal of a workpiece surface of the workpiece; and performing laser processing while rotating the optical axis of the laser around the normal of the workpiece surface as a rotation axis to form a recess and/or a through-hole in the workpiece. According to this, formation of a tapered recess and/or a tapered through-hole can be prevented even when the recess and/or the through-hole is formed with high resolution, and thus a high-resolution and complex pattern can be formed.

## Description

### TECHNICAL FIELD

The present invention relates to a laser processing method, a method for manufacturing a substrate, and a laser processing apparatus.

### BACKGROUND ART

A semiconductor package substrate has been actively developed along a trend of "More Than Moore" to SoC (System on a Chip) in which a system is integrated into one chip.

Also, the configuration of the semiconductor package substrate has become more complex and higher in density, and an apparatus using an excimer laser has been applied to manufacture a base substrate thereof.

For example, Patent Document 1 describes a laser processing method for performing shape processing on a workpiece to a predetermined depth position using a laser beam, characterized in that laser power of the laser beam and the relative moving speed between the workpiece and the laser beam are increased and the number of times of irradiation required for laser processing is reduced such that energy per unit length of the laser beam optimally set according to the workpiece falls within an energy range in which the laser beam does not penetrate the workpiece even when the laser power increases due to power fluctuations in an oscillator of the laser beam.

Also, Patent Document 2 discloses a laser processing method for processing a drilling region on a workpiece by sequentially irradiating the drilling region with a laser beam having a beam cross-section smaller than the drilling region, characterized in that the laser processing method includes: a first processing step of sequentially irradiating the entire drilling region with a laser beam having a beam cross-section of a first shape and forming a first irradiation region corresponding to the beam cross-section of the first shape on the workpiece; and a second processing step of sequentially irradiating the drilling region with a laser beam having a beam cross-section of a second shape smaller than the first shape and forming a second irradiation region corresponding to the beam cross-section of the second shape on the workpiece, in the first processing step, the drilling region is sequentially irradiated with the laser beam forming the first irradiation region so as to form an overlapping region in which parts of the first irradiation region overlap each other, and in the second processing step, the drilling region is sequentially irradiated with the laser beam forming the second irradiation region such that the second irradiation region is included in a region other than the overlapping region in the drilling region.

Additionally, Non-Patent Document 1 introduces formation of an Si through-hole having high quality and a high aspect ratio using a Bessel beam.

### CITATION LIST

### PATENT DOCUMENT

Patent Document 1: JP 2009-22978 A
Patent Document 2: WO 2013/094025 A1

### NON-PATENT DOCUMENT

Non-Patent Document 1: Koji Sugioka, "Formation of Si Through-hole Having High Quality and High Aspect Ratio by Optimized Ultrashort Pulsed Bessel Beam", FORM TECH REVIEW 2016, VOL. 26

### SUMMARY OF INVENTION

### TECHNICAL PROBLEM

Conventionally, for a recess formed by laser processing, there has been a problem that a width of a bottom of the recess is smaller than a width of an opening of the recess in an initial processed surface, that is, the recess is tapered as the recess is formed with higher resolution. Also, for a through-hole, conventionally, there has been a problem that a width of a lower end opening of the through-hole is smaller than a width of an upper end of the through-hole, that is, the through-hole is tapered as the through-hole is formed with higher resolution. The formation of such a tapered recess and/or a tapered through-hole is inconvenient for forming a high-resolution and complex pattern (for example, a circuit pattern).

In particular, for application of a semiconductor package substrate, a metal wire may be embedded in a processed recess, and, in this case, a high-resolution pattern increases wiring resistance. Thus, in order to prevent this, it is required to process a recess having a large depth and a large width to a bottom. Such processing allows production of a high-quality semiconductor package substrate having low wiring resistance.

The present invention has been made to solve the above problems, and has an object to provide a laser processing method capable of preventing formation of a tapered recess and/or a tapered through-hole even when the recess and/or the through-hole is formed with high resolution, and thus capable of forming a high-resolution and complex pattern, a method for manufacturing a substrate capable of manufacturing a substrate having a high-resolution and complex pattern, and a laser processing apparatus capable of preventing formation of a tapered recess and/or tapered through-hole even when the recess and/or the through-hole is formed with high resolution, further capable of providing a high-quality semiconductor package substrate having low wiring resistance, and thus capable of forming a high-resolution and complex pattern.

### SOLUTION TO PROBLEM

In order to solve the above problems, the present invention provides, as a laser processing method of a first aspect, a laser processing method for forming a recess and/or a through-hole in a workpiece using a laser, wherein
the workpiece is irradiated with a laser having an optical axis inclined with respect to a normal of a workpiece surface of the workpiece; and
laser processing is performed while rotating the optical axis of the laser around the normal of the workpiece surface as a rotation axis to form a recess and/or a through-hole in the workpiece.

By virtue of such a laser processing method, the width of the bottom of the recess can be prevented from being smaller than the width of the opening of the recess in the workpiece surface even when the recess is formed with high resolution. Additionally, by virtue of such a laser processing method, the width of the lower end opening of the through-hole can be prevented from being smaller than the width of the upper end of the through-hole even when the through-hole is formed with high resolution. Specifically, by virtue of the laser processing method of the present invention, formation of a tapered recess and/or a tapered through-hole can be prevented even when the recess and/or the through-hole is formed with high resolution, and thus a high-resolution and complex pattern can be formed.

Preferably, an inclination angle of the optical axis with respect to the normal of the workpiece surface is 3° or more and 15° or less.

By virtue of performing the processing while irradiating the workpiece with the laser beam at such an inclination angle, formation of a tapered recess and/or a tapered through-hole can be more reliably prevented.

For example, the laser processing may be performed while rotating the optical axis of the laser at a frequency of 10 Hz or more and 300 Hz or less.

The frequency of the rotation may be, but not particularly limited to, for example, 10 Hz or more and 300 Hz or less.

The present invention also provides, as a laser processing method of a second aspect, a laser processing method for forming a recess and/or a through-hole in a workpiece using a laser, wherein
laser processing is performed by wobble-laser irradiation using a wobble device to form a recess and/or a through-hole in the workpiece.

By virtue of such a laser processing method, the width of the bottom of the recess can be prevented from being smaller than the width of the opening of the recess in a workpiece surface even when the recess is formed with high resolution. Additionally, by virtue of such a laser processing method, the width of the lower end opening of the through-hole can be prevented from being smaller than the width of the upper end of the through-hole even when the through-hole is formed with high resolution. Specifically, by virtue of the laser processing method of the present invention, formation of a tapered recess and/or a tapered through-hole can be prevented even when the recess and/or the through-hole is formed with high resolution, and thus a high-resolution and complex pattern can be formed.

In both the first and second aspects, for example, the workpiece may be a semiconductor package substrate, and a recess and/or a through-hole may be formed in the semiconductor package substrate.

As such, in both the first and second aspects, the recess and/or the through-hole can be formed in the semiconductor package substrate. Particularly for processing of the semiconductor package substrate, a processing pattern may mixedly include through-holes and recesses formed by, for example, VIA processing and groove processing. In this case, by virtue of the method of the present invention, the VIA processing and the groove processing can be performed in the same step without separating the steps. Additionally, the semiconductor package substrate has become higher in density, and with a conventional laser drilling method in the VIA processing, a processing time increases due to an increase in the number of holes to be processed with increasing density, while with the present method, there is no increase in processing time due to an increase in the number of holes to be processed and an increase in resolution of the pattern.

For example, the laser may be oscillated using an excimer laser oscillator.

The laser oscillation means is not particularly limited, but for example, an excimer laser oscillator can be used.

The workpiece may be irradiated with the laser through a photomask.

The laser processing of the present invention may also be performed using the photomask.

The processing may be performed while relatively scanning the laser relative to the workpiece.

The laser processing of the present invention may be scanning processing.

For example, ablation processing may be performed.

According to the laser processing method of the present invention, for example, ablation processing may be performed.

For example, the recess and/or the through-hole having a width of 20 µm or less may be formed.

According to the laser processing method of the present invention, a high-resolution pattern can be formed including a recess and/or a through-hole having a width of, for example, 20 µm or less.

For example, as the recess and/or the through-hole, the recess and/or the through-hole may be formed such that a ratio of a processed portion height to a width of a bottom of the recess or a width of a lower end opening of the through-hole is 1.0 or more.

According to the laser processing method of the present invention, a recess and/or a through-hole having such a high aspect ratio can be formed.

For example, the recess may be formed such that the width of the bottom of the recess is 70% or more of an opening width of the recess in an initial processed surface of the workpiece, and/or
the through-hole may be formed such that the width of the lower end opening of the through-hole is 70% or more of a width of an upper end opening of the through-hole in the initial processed surface.

According to the laser processing method of the present invention, for example, the recess may be formed such that the width of the bottom of the recess is 70% or more of the opening width of the recess in the initial processed surface of the workpiece, and/or the through-hole may be formed such that the width of the lower end opening of the through-hole is 70% or more of the width of the upper end opening of the through-hole in the initial processed surface of the workpiece.

For example, a plurality of the recesses may be formed, and a distance between bottoms of the recesses adjacent to each other may be 110% or less of a width of the bottom.

As such, according to the laser processing method of the present invention, a plurality of recesses can be formed with high density. Additionally, a large contact area can be obtained at an interface between wiring and the substrate, thereby avoiding a problem such as detachment of the wiring.

Preferably, the processing is performed while the laser is being imaged on the workpiece surface of the workpiece.

By virtue of performing the processing while imaging the laser in this manner, irradiation with the laser can be performed such that a rotation trajectory of the laser increases as the processing proceeds and the laser travels farther from the workpiece surface on which the laser is imaged. Additionally, by virtue of imaging, accurate positioning at a processing point can be performed.

Preferably, the workpiece is irradiated with the laser through the photomask, and the laser is imaged on a film surface formed on the photomask.

By virtue of performing the processing with the photomask while imaging the laser in this manner, more reliable pattern transfer by the photomask can be performed, and desired processing can be performed with higher accuracy.

The present invention also provides a method for manufacturing a substrate having a recess and/or a through-hole, wherein the recess and/or the through-hole is formed in a substrate as the workpiece by the laser processing method according to the first or second aspect of the present invention.

By virtue of such a method for manufacturing a substrate, the width of the bottom of the recess can be prevented from being smaller than the width of the opening of the recess in a workpiece surface even when the recess is formed with high resolution. Additionally, by virtue of such a laser processing method, the width of the lower end opening of the through-hole can be prevented from being smaller than the width of the upper end of the through-hole even when the through-hole is formed with high resolution. Specifically, by virtue of the method for manufacturing a substrate of the present invention, formation of a tapered recess and/or a tapered through-hole can be prevented even when the recess and/or the through-hole is formed with high resolution, and thus a substrate having a high-resolution and complex pattern can be manufactured.

The present invention also provides, as a laser processing apparatus of a first aspect, a laser processing apparatus for forming a recess and/or a through-hole in a workpiece using a laser, the laser processing apparatus comprising:
a laser source that oscillates a laser; and
a shaping optical system configured to irradiate the workpiece with the laser having an optical axis inclined with respect to a normal of a workpiece surface of the workpiece and to rotate the optical axis of the laser around the normal of the workpiece surface as a rotation axis.

By virtue of such a laser processing apparatus, formation of a tapered pattern can be prevented even when the workpiece is processed with high resolution, and thus a high-resolution and complex pattern can be formed.

The present invention also provides, as a laser processing apparatus of a second aspect, a laser processing apparatus for forming a recess and/or a through-hole in a workpiece using a laser, the laser processing apparatus comprising:
a laser source that oscillates a laser; and
a wobble device configured to convert the laser into a wobble laser.

By virtue of such a laser processing apparatus, formation of a tapered pattern even can be prevented when the workpiece is processed with high resolution, and thus a high-resolution and complex pattern can be formed.

Preferably, the laser processing apparatus of the second aspect further comprises a shaping device that shapes an energy distribution of the laser emitted from the laser source, and the wobble device is provided between the laser source and the shaping device.

By virtue of such a laser processing apparatus, a desired pattern can be formed with higher accuracy.

The wobble device may include, for example, a galvanometer scanner.

The wobble device may also include a rotation mechanism configured to rotate a prism.

The wobble device may include, for example, a galvanometer scanner, a rotation mechanism configured to rotate a prism, or both.

In both the first and second aspects, the laser processing apparatus may comprise, for example, an excimer laser oscillator as the laser source.

The laser source may be, but not particularly limited to, for example, an excimer laser oscillator.

Preferably, in both the first and second aspects, the laser processing apparatus further comprises an optical system configured to image the laser on the workpiece surface of the workpiece.

By virtue of such a laser processing apparatus further comprising the optical system for imaging the laser, processing can be performed on the workpiece surface with a laser beam of a non-rotating shape and processing can be performed with a laser beam having an expanding and rotating shape as the processing proceeds from the workpiece surface. Additionally, by virtue of imaging, accurate positioning at a processing point can be performed.

Preferably, the laser processing apparatus further comprises:
a stage on which the workpiece is placed; and
a photomask provided between the shaping optical system and the stage.

By virtue of such a laser processing apparatus further comprising a photomask, a desired pattern can be formed on the workpiece with high accuracy.

In this case, more preferably, the laser processing apparatus further comprises an optical system configured to image the laser on a film surface formed on the photomask.

By virtue of such a laser processing apparatus further comprising an optical system, mask pattern transfer by the photomask can be performed more reliably, and a desired pattern can be formed on the workpiece with particularly higher accuracy.

The laser processing apparatus may further comprise a controller configured to move the workpiece placed on the stage and the photomask in synchronization with each other.

The laser processing apparatuses of the first and second aspects of the present invention may further comprise such a controller.

### ADVANTAGEOUS EFFECTS OF INVENTION

As described above, by virtue of the laser processing method of the present invention, formation of a tapered recess and/or a tapered through-hole can be prevented even when the recess and/or the through-hole is formed with high resolution, and thus a high-resolution and complex pattern can be formed.

Additionally, by virtue of the method for manufacturing a substrate of the present invention, formation of a tapered recess and/or a tapered through-hole can be prevented even when the recess and/or the through-hole is formed with high resolution, and thus a substrate having a high-resolution and complex pattern can be manufactured.

Further, by virtue of the laser processing apparatus of the present invention, formation of a tapered pattern can be prevented even when the workpiece is processed with high resolution, and thus a high-resolution and complex pattern can be formed.

### BRIEF DESCRIPTION OF DRAWINGS

[FIG. 1] FIG. 1 is a schematic view of an example of a laser processing apparatus of the present invention.
[FIG. 2] FIG. 2 is a schematic view of an example of rotation of a laser optical axis in the laser processing apparatus of the present invention.
[FIG. 3] FIG. 3 is a schematic view of an example of a galvanometer scanner that can be included in the laser processing apparatus of the present invention.
[FIG. 4] FIG. 4 is a schematic view of an example of a wobble device that can be included in the laser processing apparatus of the present invention.
[FIG. 5] FIG. 5 is a schematic view of an example of a change in state of irradiation of a workpiece with a laser in the laser processing method of the present invention.
[FIG. 6] FIG. 6 is a schematic view of an example of a change in laser beam profile in the laser processing apparatus of the present invention.
[FIG. 7] FIG. 7 is a schematic view of an example of a change in laser beam profile in the laser processing method of the present invention.
[FIG. 8] FIG. 8 shows a part of the change in beam profile in FIG. 7 in more detail.
[FIG. 9] FIG. 9 is a schematic partial sectional view of a substrate having a recess pattern as an example that can be formed using the laser processing method of the present invention.
[FIG. 10] FIG. 10 is a schematic perspective view of a substrate having a recess pattern as another example that can be formed using the laser processing method of the present invention.
[FIG. 11] FIG. 11 is a schematic partial sectional view of a substrate having a through-hole pattern as an example that can be formed using the laser processing method of the present invention.
[FIG. 12] FIG. 12 is a schematic partial sectional view of a substrate having a recess and a through-hole pattern as an example that can be formed using the laser processing method of the present invention.

### DESCRIPTION OF EMBODIMENTS

As described above, there has been a demand for development of a laser processing method capable of preventing formation of a tapered recess and/or a tapered through-hole even when the recess and/or the through-hole is formed with high resolution, and thus capable of forming a high-resolution and complex pattern, a method for manufacturing a substrate capable of manufacturing a substrate having a high-resolution and complex pattern, and a laser processing apparatus capable of preventing formation of a tapered recess and/or a tapered through-hole even when the recess and/or the through-hole is formed with high resolution, further capable of providing a high-quality semiconductor package substrate having low wiring resistance, and thus capable of forming a high-resolution and complex pattern.

The present inventors have intensively studied the above problems, and found that by irradiating a workpiece with a laser having an optical axis inclined with respect to a normal of a workpiece surface of the workpiece and performing laser processing while rotating the optical axis of the laser around the normal of the workpiece surface as a rotation axis, or performing laser processing by wobble-laser irradiation using a wobble device, formation of a tapered recess and/or a tapered through-hole can be prevented, and thus a high-resolution and complex pattern can be formed, thereby completing the present invention.

That is, the present invention provides a laser processing method for forming a recess and/or a through-hole in a workpiece using a laser, wherein
the workpiece is irradiated with a laser having an optical axis inclined with respect to a normal of a workpiece surface of the workpiece; and
laser processing is performed while rotating the optical axis of the laser around the normal of the workpiece surface as a rotation axis to form a recess and/or a through-hole in the workpiece.

The present invention also provides a laser processing method for forming a recess and/or a through-hole in a workpiece using a laser, wherein
laser processing is performed by wobble-laser irradiation using a wobble device to form a recess and/or a through-hole in the workpiece.

The present invention also provides a method for manufacturing a substrate having the recess and/or the through-hole, wherein the recess and/or the through-hole is formed in a substrate as the workpiece by the laser processing method of the present invention.

The present invention also provides a laser processing apparatus for forming a recess and/or a through-hole in a workpiece using a laser, the laser processing apparatus including:
a laser source that oscillates a laser; and
a shaping optical system configured to irradiate the workpiece with the laser having an optical axis inclined with respect to a normal of a workpiece surface of the workpiece and to rotate the optical axis of the laser around the normal of the workpiece surface as a rotation axis.

The present invention also provides a laser processing apparatus for forming a recess and/or a through-hole in a workpiece using a laser, the laser processing apparatus including:
a laser source that oscillates a laser; and
a wobble device configured to convert the laser into a wobble laser.

The present invention will be described in detail below with reference to the drawings, but the present invention is not limited thereto.

### [Laser Processing Apparatus]

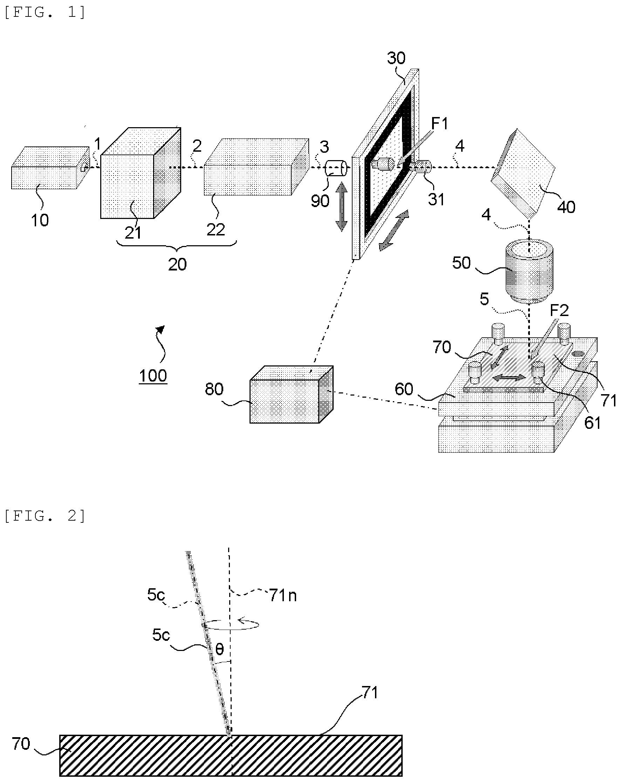

FIG. 1 is a schematic view of an example of a laser processing apparatus of the present invention. The laser processing apparatus 100 in FIG. 1 is an example of the laser processing apparatus of the present invention, but the laser processing apparatus of the present invention is not limited to the apparatus in FIG. 1. Hereinafter, the laser processing apparatus in FIG. 1 will be described in terms of each of first and second aspects.

### <First Aspect>

In terms of the first aspect, the laser processing apparatus 100 in FIG. 1 is a laser processing apparatus 100 for forming a recess and/or a through-hole in a workpiece 70 using a laser, the laser processing apparatus 100 including: a laser source 10 that oscillates a laser 1; and a shaping optical system 20.

The light source 10 that oscillates the laser 1 is, for example, a light source (laser oscillator) 10 that applies (emits) the laser 1 in a pulsed manner. More specifically, the laser source 10 in FIG. 1 includes an excimer laser oscillator.

The shaping optical system 20 is configured to irradiate the workpiece 70 with a laser 5 having an optical axis 5c inclined with respect to a normal 71n of a workpiece surface 71 of the workpiece 70 as shown in FIG. 2. Also, for example the shaping optical system 20 is configured to rotate the optical axis 5c of the laser 5 around the normal 71n of the workpiece surface 71 as a rotation axis as shown in FIG. 2. In the example in FIG. 1, the shaping optical system 20 includes a wobble device 21 and a shaping device 22. However, the shaping optical system 20 in the laser processing apparatus 100 according to the first aspect is not limited to one including the wobble device 21 and the shaping device 22.

The wobble device 21 is configured to convert the laser 1 incident thereon into a wobble laser 2. The wobble device 21 will be described later in detail.

The shaping device 22 is configured to shape an energy distribution of the laser 1 emitted from the laser source 10, more precisely, an energy distribution of the wobble laser 2 into which the laser 1 has been converted by the wobble device 21. The shaping of the energy distribution by the shaping device 22 will be described later in the description of the laser processing method.

The laser processing apparatus 100 in FIG. 1 further includes a photomask 30, a turning mirror 40, and an imaging lens (objective lens) 50 in this order from the shaping optical system 20 to the workpiece 70 in an optical path of the laser processing apparatus 100. The laser processing apparatus 100 in this example is greatly different from an example of a conventional welding apparatus using a wobble device that adopts a configuration in which the wobble device is provided immediately before a workpiece.

A laser 3 having the energy distribution shaped by the shaping device 22 is incident on the photomask 30. The photomask 30 has a mask pattern corresponding to a pattern of recesses and/or through-holes to be processed in the workpiece 70. Thus, a laser 4 reflecting the mask pattern is emitted from the photomask 30. The laser beam 4 is changed in direction of its optical axis by the turning mirror 40 and is incident on the imaging lens 50. The imaging lens 50 is an optical system configured to image the laser 4 on the workpiece surface 71 (at a focal point F2) of the workpiece 70. The workpiece 70 is irradiated with the laser 5 from the imaging lens 50.

The laser processing apparatus 100 further includes a stage 60 on which the workpiece 70 is placed, and a controller 80 electrically connected to the photomask 30 and the stage 60. In another aspect, the laser processing apparatus 100 further includes the stage 60 on which the workpiece 70 is placed, and the photomask 30 provided between the shaping optical system 20 and the stage 60.

Additionally, as shown in FIG. 1, the laser processing apparatus 100 may further include, between the shaping device 22 and the photomask 30, an optical system 90 configured to image the laser 3 on a film surface (focal point F1) formed on the photomask 30.

It should be noted that the optical system 90, the photomask 30, the turning mirror 40, the imaging lens 50, the stage 60, and the controller 80 are arbitrary members for the laser processing apparatus 100 of the present invention.

The laser processing apparatus 100 in FIG. 1 also includes a mask alignment camera 31 as imaging means for reading a characteristic portion of the photomask 30, and a workpiece alignment camera 61 as imaging means for reading a characteristic portion of the workpiece 70. The mask alignment camera 31 is configured to send position information of the characteristic portion of the photomask 30 to the controller 80. The workpiece alignment camera 61 is configured to send position information of the characteristic portion of the workpiece 70 to the controller 80. The controller 80 is configured to adjust a relative position between the workpiece 70 and the photomask 30 based on the pieces of position information. In another aspect, the controller 80 is configured to move the workpiece 70 placed on the stage 60 and the photomask 30 in synchronization with each other.

### <Second Aspect>

In terms of the second aspect, the laser processing apparatus in FIG. 1 is a laser processing apparatus 100 for forming a recess and/or a through-hole in a workpiece 70 using a laser, the laser processing apparatus 100 including: a laser source 10 that oscillates a laser 1, and a wobble device 21 configured to convert the laser 1 into a wobble laser 2.

The laser processing apparatus 100 in FIG. 1 further includes a shaping device 22 configured to shape an energy distribution of the laser 1 emitted from the laser source 10, more precisely, an energy distribution of the wobble laser 2 into which the laser 1 has been converted by the wobble device 21. Also, the wobble device 21 is provided between the laser source 10 and the shaping device 22. It should be noted that, in the laser processing apparatus 100 of the second aspect, the shaping device 22 is an arbitrary member.

For the configuration other than the above, refer to the description in terms of the first aspect.

Here, the wobble device 21 will be described in more detail.

The wobble device 21 is a device that rotates and/or vibrates a laser (converts a laser into a wobble laser) and irradiates an object with the wobble laser. Examples of application of the wobble device in laser welding and the like are disclosed in, for example, JP 2022-001374 A, JP 2022-127158 A, and JP 2023-004207 A, but these examples are intended for welding, and there is no example of the wobble device used for laser processing for forming fine recesses or through-holes.

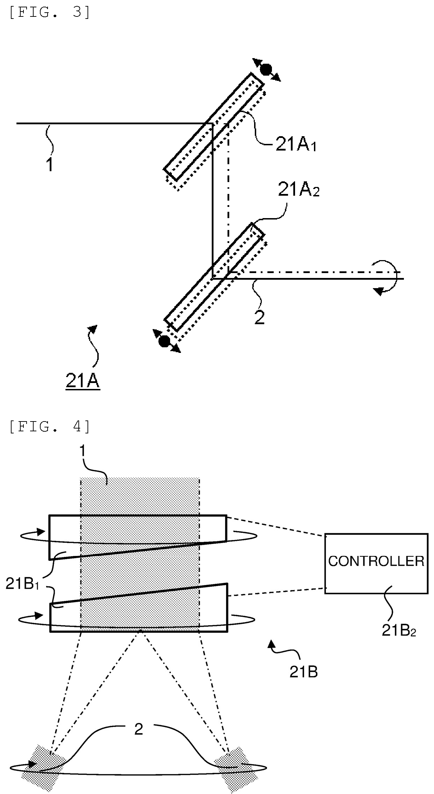

The wobble device 21 may include, for example, a galvanometer scanner 21A as shown in FIG. 3 and/or a rotation mechanism 21B configured to rotate a prism 21B₁ as shown in FIG. 4.

The galvanometer scanner 21A may include, for example, galvanometer mirrors 21A₁ and 21A₂ as shown in FIG. 3. The galvanometer mirrors 21A₁ and 21A₂ can be moved in two axial directions (arrow directions and the direction perpendicular to the plane of paper) in conjunction with each other, and therefore, in the optical path of the laser 1 passing through the galvanometer mirrors 21A₁ and 21A₂, the optical axis of the laser 2 can be inclined and rotated.

As shown in FIG. 4, for example, the rotation mechanism 21B may include a pair of prisms (wedge prisms) 21B₁ and a controller 21B₂ configured to control rotation of the prisms 21B₁. Each of the prisms (wedge prisms) 21B₁ has a substantially trapezoidal cross-sectional shape.

As schematically shown in FIG. 4, when the laser 1 is incident on the pair of rotating prisms (wedge prisms) 21B₁, the laser 1 is converted into a wobble laser 2 having an inclined and rotating optical axis.

Using the laser processing apparatus of the present invention described above, the laser processing method of the present invention described in detail below can be performed. As will be described in detail below, by virtue of the laser processing method of the present invention, formation of a tapered recess and/or a tapered through-hole can be prevented even when the recess and/or the through-hole is formed with high resolution, and thus a high-resolution and complex pattern can be formed. Therefore, the laser processing apparatus of the present invention can be used to prevent formation of a tapered recess and/or a tapered through-hole even when the recess and/or the through-hole is formed with high resolution, and thus to form a high-resolution and complex pattern.

### [Laser Processing Method]

The laser processing method of the present invention can be performed using, for example, the laser processing apparatus of the present invention described above. However, the laser processing method of the present invention can be performed using an apparatus other than the laser processing apparatus of the present invention.

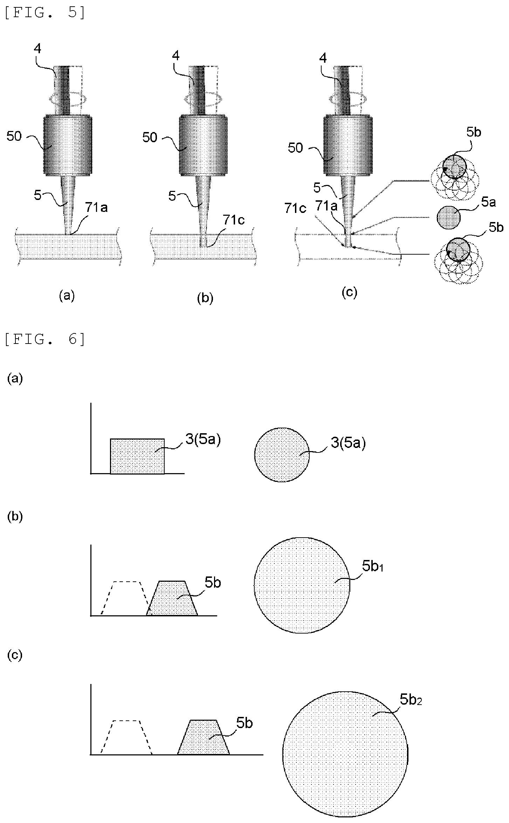

Hereinafter, the laser processing method of the present invention will be described in two terms of the first and second aspects with reference to FIGS. 1 to 4 again and newly with reference to FIGS. 5 to 8.

### <First Aspect>

In the first aspect, the laser processing method of the present invention is a laser processing method for forming a recess and/or a through-hole in a workpiece 70 using a laser 5, wherein, as shown in FIG. 2: the workpiece 70 is irradiated with the laser 5 having an optical axis 5c inclined with respect to a normal 71n of a workpiece surface 71 of the workpiece 70; and laser processing is performed while rotating the optical axis 5c of the laser 5 around the normal 71n of the workpiece surface 71 as a rotation axis to form a recess and/or a through-hole in the workpiece 70.

By performing such processing, for example, as shown in FIG. 5(b), when the formation of the recess and/or the through-hole proceeds, the laser 5 can exhibit an expanding and rotating beam shape as it travels in a depth direction of the workpiece 70. By virtue of this, the processing can proceed on a processed surface 71c, which is not reduced in size as compared to an initial processed surface 71a in FIG. 5(a).

Therefore, for example, in formation of a recess, the width of the bottom of the recess can be prevented from being smaller than the width of the opening of the recess in a workpiece surface even when the recess is formed with high resolution. Alternatively, in formation of a through-hole, the width of the lower end opening of the through-hole can be prevented from being smaller than the width of the upper end of the through-hole even when the through-hole is formed with high resolution. That is, by virtue of the laser processing method of the first aspect of the present invention, formation of a tapered recess and/or a tapered through-hole can be prevented even when the recess and/or the through-hole is formed with high resolution, and thus a high-resolution and complex pattern can be formed. Additionally, a large contact area can be obtained at an interface between wiring and the substrate, thereby avoiding a problem such as detachment of the wiring.

Preferably, an inclination angle θ of the optical axis 5c with respect to the normal 71n of the workpiece surface 71 shown in FIG. 2 is 3° or more and 15° or less.

By virtue of performing the processing while irradiating the workpiece 70 with the laser beam 5 at such an inclination angle θ, formation of a tapered recess and/or a tapered through-hole can be more reliably prevented. The inclination angle θ can be controlled by controlling, for example, the galvanometer scanner 21A in FIG. 3 and the mechanism 21B for rotating the prisms 21B₁ in FIG. 4. Preferably, the inclination angle θ is controlled in consideration of, for example, a numerical aperture NA of the imaging lens 50.

For example, the laser processing may be performed while rotating the optical axis of the laser at a frequency of 10 Hz or more and 300 Hz or less.

Preferably, the frequency of rotation is controlled in consideration of, for example, a pulse frequency of the laser.

### <Second Aspect>

In the second aspect, the laser processing method of the present invention is a laser processing method for forming a recess and/or a through-hole in a workpiece 70 using a laser 5, wherein laser processing is performed by wobble-laser irradiation using a wobble device 21 to form a recess and/or a through-hole in the workpiece 70.

By performing such processing, for example, as shown in FIG. 5(b), when the formation of the recess and/or the through-hole proceeds, the laser 5 can exhibit an expanding and rotating beam shape as it travels in a depth direction of the workpiece 70. By virtue of this, the processing can proceed on a processed surface 71c in FIG. 5(b), which is not reduced in size as compared to an initial processed surface 71a shown in FIG. 5(a).

Therefore, for example, in formation of a recess, the width of the bottom of the recess can be prevented from being smaller than the width of the opening of the recess in a workpiece surface even when the recess is formed with high resolution. Alternatively, in formation of a through-hole, the width of the lower end opening of the through-hole can be prevented from being smaller than the width of the upper end of the through-hole even when the through-hole is formed with high resolution. That is, by virtue of the laser processing method of the second aspect of the present invention, formation of a tapered recess and/or a tapered through-hole can be prevented even when the recess and/or the through-hole is formed with high resolution, and thus a high-resolution and complex pattern can be formed.

### <Common features>

Hereinafter, common features between the first and second aspects will be described.

In the laser processing method of the present invention, for example, the workpiece 70 may be a semiconductor package substrate, and a recess and/or a through-hole may be formed in the semiconductor package substrate.

According to the laser processing method of the present invention, for example, the recess and/or the through-hole can be formed in the semiconductor package substrate. Particularly for processing of the semiconductor package substrate, a processing pattern may mixedly include through-holes and recesses formed by, for example, VIA processing and groove processing. In this case, by virtue of the laser processing method of the present invention, the VIA processing and the groove processing can be performed in the same step without separating the steps. Additionally, the semiconductor package substrate has become higher in density, and with a conventional laser drilling method in the VIA processing, a processing time increases due to an increase in the number of holes to be processed with increasing density, while with the present method, there is no increase in processing time due to an increase in the number of holes to be processed and an increase in resolution of the pattern.

For example, the laser 1 may be oscillated using an excimer laser oscillator. As described above, the oscillation means of the laser 1 is not particularly limited, but for example, an excimer laser oscillator can be used as the laser source 10.

The workpiece 70 can be irradiated with the laser through the photomask 30 shown in FIG. 1. The photomask 30 has a mask pattern corresponding to a pattern of recesses and/or through-holes to be processed in the workpiece 70. Thus, by virtue of using the photomask 30, a desired pattern of the recesses and/or the through-holes can be formed in the workpiece 70.

The processing may be performed while scanning the laser 5 relative to the workpiece 70. For example, by virtue of using the stage 60 on which the workpiece 70 is placed and the controller 80 electrically connected to the photomask 30 and the stage 60, which are described with reference to FIG. 1, processing can be processing while scanning the laser 5 relative to the workpiece 70 (scanning processing). However, in the laser processing of the present invention, the scanning processing may be performed by other means.

Additionally, according to the laser processing method of the present invention, for example, ablation processing may be performed.

Preferably, in the laser processing method of the present invention, the processing is performed while the laser 5 is being imaged on the workpiece surface 71 of the workpiece 70.

FIG. 5 shows an example in which the processing is performed while the laser 5 is being imaged on the workpiece surface 71 of the workpiece 70. The imaging in this example can be performed using the imaging lens 50 in FIGS. 1 and 2. With such a method, since a rotation center of the optical axis of the laser 5 is formed on the initial processed surface 71a shown in FIG. 5(a), a beam of a laser 5a is not rotated on the initial processed surface 71a shown in FIG. 5(a), as shown in FIG. 5(c). On the other hand, as shown in FIG. 5(c), as the laser 5 travels farther from the initial processed surface 71a as an imaging point (focal point), the laser 5 turns into a laser 5b having an expanding and rotating beam shape. According to this, the processing can proceed on the processed surface 71c shown in FIG. 5(b), which is not reduced in size as compared to the initial processed surface 71a shown in FIG. 5(a).

Further, by imaging on the initial processed surface 71a, accurate positioning can be performed.

Additionally, preferably, the shaping device 22 shown in FIG. 1 is used to shape an energy distribution of the laser 1 emitted from the laser source 10, more precisely, an energy distribution of the wobble laser 2 into which the laser 1 has been converted by the wobble device 21.

The shaping device 22 can shape the energy distribution (beam profile) of the wobble laser 2 into, for example, a top-hat shape as shown in FIG. 6(a). The laser 3 (5a) having such a top-hat shaped energy distribution turns into a laser 5b₁ and a laser 5b₂ close to an energy distribution before the shaping as it travels farther from the imaging point, as shown in FIGS. 6(b) and 6(c). In the laser processing method of the present invention, the beam profile of the wobble laser 2 having the inclined and rotating optical axis can be used as the beam profile before shaping. Therefore, the beam profiles of the laser 5b₁ and the laser 5b₂ each take on an expanding and rotating beam shape as they travel farther from the initial processed surface 71a as the imaging point.

Further, preferably, the workpiece 70 is irradiated with the laser 5 through the photomask 30 in FIG. 1, and more preferably, the laser 3 is imaged on the film surface formed on the photomask 30.

This imaging can be performed by the optical system 90 shown in FIG. 1. Specifically, the shaped laser 3 emitted from the shaping device 22 is imaged at the focal point F1 on the film surface of the photomask 30.

By performing the processing with the photomask 30 while imaging the laser in this manner, desired pattern processing according to the pattern shape of the photomask 30 can be performed with higher accuracy.

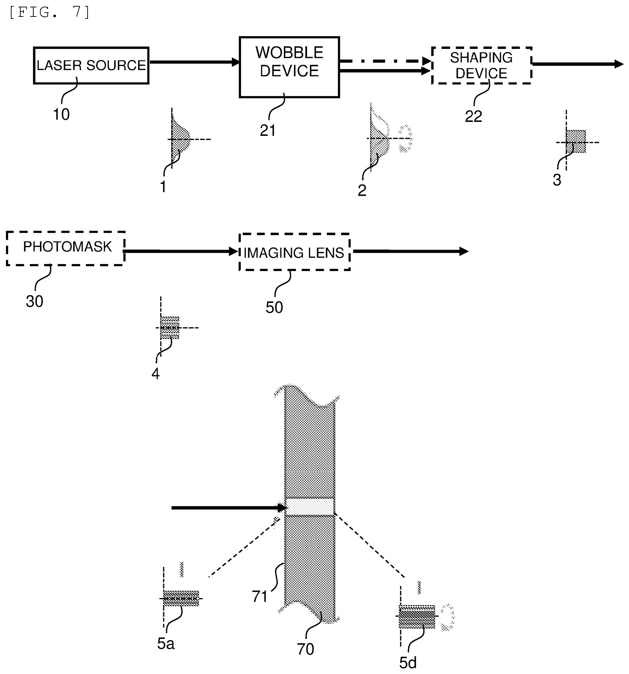

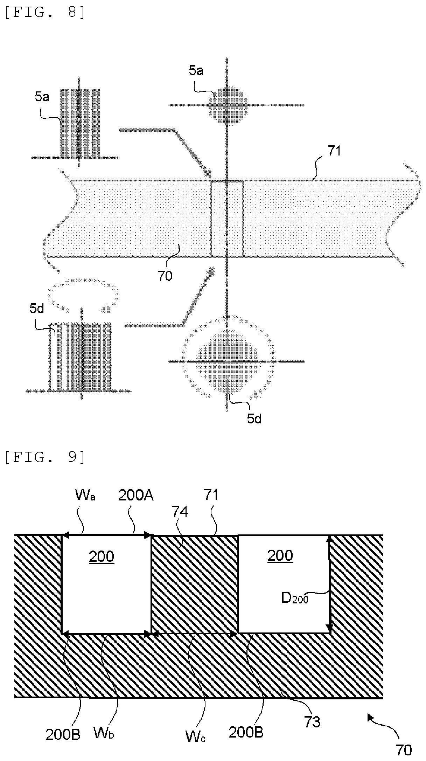

Next, with reference to FIGS. 7 and 8, a change in the energy distribution (beam profile) of the laser will be described in the case where the through-hole 300 is formed in the workpiece (substrate) 70 by an example of the laser processing method of the present invention.

In this example, the laser is imaged on each of the film surface of the photomask 30 and the workpiece surface 71.

The laser 1 emitted from the laser source 10 may have a Gaussian beam profile. The laser 1 is converted into the wobble laser 2 having the inclined and rotating optical axis, as described above, by the wobble device 21. Of course, the beam profile also takes on a shape having a rotating optical axis. This is an original shape before shaping.

The wobble laser 2 is shaped into a top-hat shaped laser 3 by the shaping device 22. The laser 3 is imaged on the film surface of the photomask 30 by the optical system 90 shown in FIG. 1. The beam profile of the laser 3 at the focal point F1 has no rotating optical axis as shown in FIG. 7.

The beam 3 passes through the photomask 30 having a mask pattern, and thus turns into a laser 4 having a beam profile corresponding to the mask pattern. Then, the laser 4 passes through the imaging lens 50, and thus the laser 5 is imaged on the workpiece surface 71 of the substrate 70 as the workpiece. Thus, an image is projected on the workpiece surface 71 according to the mask pattern shape of the photomask 30.

On the workpiece surface 71 as the imaging point, the laser 5a takes on a beam profile having a non-rotating optical axis. On the other hand, when the laser 5a is offset from the imaging point, the laser 5a is influenced by the original profile before the beam shaping. That is, as shown in FIG. 7 and also as shown in detail in FIG. 8, as the processing proceeds in the depth direction of the workpiece 70, the laser 5a is influenced by the original shape of the beam rotated by the wobble device 21, and turns into a laser 5d having an expanding and rotating beam shape.

By virtue of performing such laser processing, a reduction in energy density of the laser can be prevented even when the processing proceeds in the depth direction of the workpiece 70. Thus, as shown in FIGS. 7 and 8,the through-hole 300 penetrating the substrate as the workpiece 70 can be formed while preventing tapering.

That is, by virtue of the laser processing method of the present invention, the width of the bottom of the recess can be prevented from being smaller than the width of the opening of the recess in the workpiece surface 71 even when the recess is formed with high resolution. Additionally, by virtue of the laser processing method of the present invention, the width of the lower end opening of the through-hole can prevented from being smaller than the width of the upper end of the through-hole even when the through-hole is formed with high resolution. That is, by virtue of the laser processing method of the present invention, formation of a tapered recess and/or a tapered through-hole can be prevented even when the recess and/or the through-hole is formed with high resolution, and thus a high-resolution and complex pattern can be formed.

Furthermore, the laser processing method of the present invention described above can be performed using, for example, the laser processing apparatus 100 of the present invention. Therefore, by using the laser processing apparatus 100 of the present invention, the width of the bottom of the recess can be prevented from being smaller than the width of the opening of the recess in the workpiece surface 71 even when the recess is formed with high resolution. Additionally, by using the laser processing apparatus 100 of the present invention, the width of the lower end opening of the through-hole can be prevented from being smaller than the width of the upper end of the through-hole even when the through-hole is formed with high resolution. That is, by using the laser processing apparatus of the present invention, formation of a tapered recess and/or a tapered through-hole can be prevented even when the recess and/or the through-hole is formed with high resolution, and thus a high-resolution and complex pattern can be formed.

Next, examples of a recess pattern, a through-hole pattern, and a recess and through-hole pattern that can be formed using the laser processing method of the present invention will be described.

### <Recess Pattern>

FIG. 9 is a schematic partial sectional view of a substrate having a recess pattern as an example that can be formed using the laser processing method of the present invention.

The substrate 70 in FIG. 9 has recesses 200 in its surface 71. One or more recesses 200 may be provided. Each recess 200 has an opening 200A in the surface 71 of the substrate 70 and a bottom 200B. The substrate 70 has a projection 74 between the recesses 200 adjacent to each other. The plurality of recesses 200 may have the same shape or different shapes. Specifically, some of opening widths Wₐ of the openings 200A of the recesses 200 and some of widths W_{b} of the bottoms 200B may be the same or all of them may be different. The recesses 200 may have different processed portion heights D₂₀₀ (for example, depths of the recesses 200 in a thickness direction of the substrate 70), or some of the recesses 200 may have the same processed portion height D₂₀₀.

In a cross-section 73 of the substrate 70, a distance W_{c} between the bottoms 200B of the recesses 200 adjacent to each other may be, for example, 110% or less of the width W_{b} of the bottom 200B of the recess 200. The distance W_{c} between the bottoms 200B of the recesses 200 may be 100% or more and 110% or less. Here, the width W_{b} of the bottom 200B of the recess 200 is an average of the widths W_{b} of the bottoms 200B of the adjacent recesses 200. The distance W_{c} between the bottoms 200B of the recesses 200 is the shortest distance between the bottoms 200B of the recesses 200.

Additionally, according to the laser processing method of the present invention, a ratio (D₂₀₀/W_{b}) of the depth (processed portion height) D₂₀₀ of the recess 200 to the width W_{b} of the bottom 200B of the recess 200 in the cross-section 73 of the substrate 70 may be 1.0 or more.

As such, according to the laser processing method of the present invention, a recess having a high aspect ratio can be formed. The ratio D₂₀₀/W_{b} may be, for example, 10 or less, although an upper limit of the ratio D₂₀₀/W_{b} is not particularly limited.

Additionally, according to the laser processing method of the present invention, for example, the width W_{b} of the bottom 200B of the recess 200 may be 70% or more, preferably 80% or more, more preferably 90% or more of the opening width Wₐ of the recess 200 in the surface (initial processed surface) 71.

In such a substrate 70, the recess 200 has a so-called cylindrical shape rather than a tapered shape, and thus, when wiring is incorporated into the recess 200, the wiring can exhibit low resistance. Therefore, such a substrate 70 allows a wiring pattern having low wiring resistance to be realized.

Ideally, the width W_{b} of the bottom 200B of the recess 200 is equal to (100% of) the opening width Wₐ.

Additionally, according to the laser processing method of the present invention, for example, the opening width Wₐ of the recess 200 in the surface 71 and the width W_{b} of the bottom 200B, that is, the width of the recess 200 may be 20 µm or less.

By using such a substrate 70, a higher-resolution wiring pattern can be realized. The width of the recess 200 may be, for example, 1 µm or more and 20 µm or less, although its lower limit is not particularly limited.

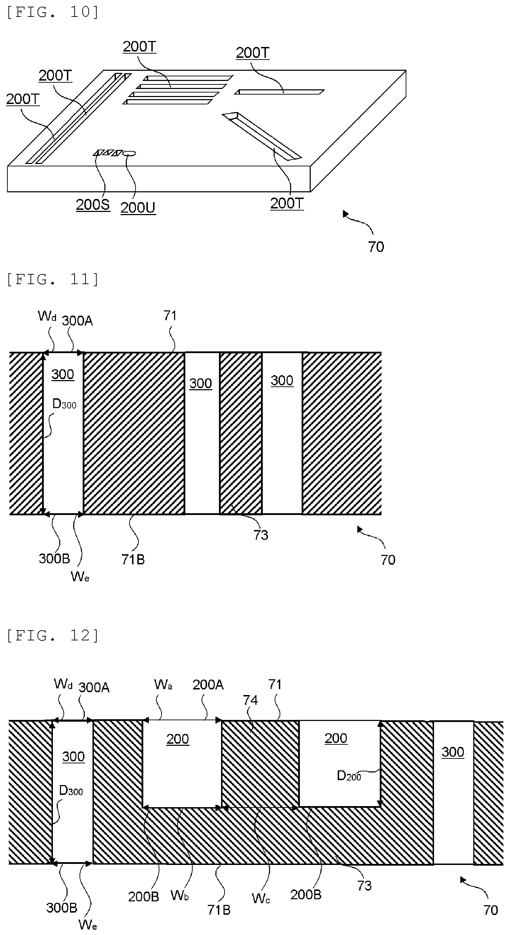

The recess 200 may include, for example, a trench 200T as shown in the perspective view in FIG. 10. The trench 200T extends in a direction parallel to the surface 71 of the substrate 70. A plurality of trenches 200T may extend in different directions as shown in FIG. 10 as an example.

The recess 200 is not limited to the trench 200T. For example, as in the example in FIG. 10, the recess 200 may include a hole 200S having a rectangular surface shape or a hole 200U having a circular surface shape. The recess 200 may have any other surface shape.

When the recess 200 is the trench 200T, the width W_{b} and the opening width Wₐ are each a width of the trench 200T in a direction orthogonal to an extending direction of the trench. When the recess 200 is the hole 200S having the rectangular surface shape, a smallest width of the surface shape is the width W_{b} and the opening width Wₐ. When the recess 200 is the hole 200U having the circular surface shape, a diameter of the circle is the width W_{b} and the opening width Wₐ. For an oval surface shape, a minor axis of the oval is the width W_{b} and the opening width Wₐ.

The recesses 200 in the cross-section 73 may have different processed portion heights D₂₀₀ (for example, depths of the recesses 200 in the thickness direction of the substrate 70), or some of the recesses may have the same processed portion height D₂₀₀. The processed portion height D₂₀₀ of the recess 200 may be, for example, 5 µm or more and 20 µm or less.

### <Through-hole Pattern>

FIG. 11 is a schematic partial sectional view of a substrate having a through-hole pattern as an example that can be formed using the laser processing method of the present invention.

The substrate 70 in FIG. 11 has through-holes 300 penetrating from the surface 71 to a back surface 71B opposite to the surface 71.

According to the laser processing method of the present invention, the width Wₑ of the lower end opening 300B of the through-holes 300 in the back surface 71B may be 70% or more of a width W_{d} of an upper end opening 300A of the through-hole 300 in the surface (initial processed surface) 71.

In such a substrate 70, the through-hole 300 has a so-called cylindrical shape rather than a tapered shape, and thus, when VIA processing of the through-hole 300 is performed, high-resolution but deep VIA electrode processing can be performed without tapering during processing. Therefore, by using such a substrate 70, a VIA electrode pattern having a high aspect can be realized.

Additionally, since the through-hole 300 does not have a tapered shape, there is no need to increase the width W_{d} of the upper end opening 300A of the through-hole 300 more than necessary in order to ensure the width Wₑ of the lower end opening 300B of the through-hole 300. Therefore, by using the substrate 70, a high-resolution and complex VIA pattern can be realized.

Ideally, the width Wₑ of the lower end opening 300B of the through-hole 300 is equal to (100% of) the width W_{d} of the upper end opening 300A. The width Wₑ of the lower end opening 300B of the through-hole 300 may be 70% or more, preferably 80% or more, and more preferably 90% or more of the width W_{d} of the upper end opening 300A.

One or more through-holes 300 may be provided. When a plurality of through-holes 300 are provided, the widths W_{d} and the widths Wₑ of the plurality of through-holes 300 may be the same or different.

The planar shape of the through-hole 300 is not particularly limited. When the through-hole 300 has a rectangular surface shape, a smallest width of the surface shape is the width W_{d} and the width Wₑ. When the through-hole 300 has a circular surface shape, a diameter of the circle is the width W_{d} and the width Wₑ. For an oval surface shape, a minor axis of the oval is the width W_{d} and the width Wₑ.

According to the laser processing method of the present invention, the width W_{d} of the upper end opening 300A of the through-hole 300 in the surface 71 and the width Wₑ of the lower end opening may be 20 µm or less. Specifically, by virtue of the laser processing method of the present invention, a through-hole having a width of 20 µm or less can be formed.

By using such a substrate 70, a semiconductor package having a higher-resolution VIA electrode pattern can be realized.

The width W_{d} of the upper end opening 300A may be, for example, 1 µm or more, although its lower limit is not particularly limited.

According to the laser processing method of the present invention, the ratio of the processed portion height D₃₀₀ of the through-hole 300 to the width Wₑ of the lower end opening 300B of the through-hole 300 in the back surface 71B may be, for example, 1.0 or more. The ratio of the processed portion height D₃₀₀ to the width Wₑ of the lower end opening 300B of the through-hole 300 may be, but not particularly limited to, for example, 1.0 or more and 10.0 or less.

### <Recess and Through-hole Pattern>

According to the laser processing method of the present invention, a pattern including both the recess 200 and the through-hole 300 as shown in FIG. 12 can be formed. For details of the recess 200 and the through-hole 300, see the above.

In particular, according to the laser processing method of the present invention, a fine pattern can be formed, for example, by forming a plurality of recesses 200 between the through-holes 300 as shown in FIG. 12. Also, as described above, the recess 200 and the through-hole 300 can be formed so as not to have tapered shapes.

### [Method for Manufacturing Substrate]

As described above, according to the laser processing method of the present invention, a recess and a through-hole can be formed in a substrate as a workpiece.

Specifically, the present invention provides a method for manufacturing a substrate having a recess and/or a through-hole, the method including forming the recess and/or the through-hole in a substrate as the workpiece by the laser processing method according to the first or second aspect of the present invention.

As described above, by virtue of such a method for manufacturing a substrate, the width of the bottom of the recess can be prevented from being smaller than a width of an opening of the recess in a workpiece surface even when the recess is formed with high resolution. Additionally, by virtue of such a laser processing method, the width of the lower end opening of the through-hole can be prevented from being smaller than the width of an upper end of the through-hole even when the through-hole is formed with high resolution. That is, by virtue of the method for manufacturing a substrate of the present invention, formation of a tapered recess and/or a tapered through-hole can be prevented even when the recess and/or the through-hole is formed with high resolution, and thus a substrate having a high-resolution and complex pattern can be manufacturing.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

## Claims

1. A laser processing method for forming a recess and/or a through hole in a workpiece using a laser, wherein
the workpiece is irradiated with a laser having an optical axis inclined with respect to a normal of a workpiece surface of the workpiece; and
laser processing is performed while rotating the optical axis of the laser around the normal of the workpiece surface as a rotation axis to form a recess and/or a through hole in the workpiece.

2. The laser processing method according to claim 1, wherein an inclination angle of the optical axis with respect to the normal of the workpiece surface is 3° or more and 15° or less.

3. The laser processing method according to claim 1 or 2, wherein the laser processing is performed while rotating the optical axis of the laser at a frequency of 10 Hz or more and 300 Hz or less.

4. A laser processing method for forming a recess and/or a through hole in a workpiece using a laser, wherein
laser processing is performed by wobble-laser irradiation using a wobble device to form a recess and/or a through hole in the workpiece.

5. The laser processing method according to any one of claims 1 to 4, wherein the workpiece is a semiconductor package substrate, and a recess and/or a through hole is formed in the semiconductor package substrate.

6. The laser processing method according to any one of claims 1 to 5, wherein the laser is oscillated using an excimer laser oscillator.

7. The laser processing method according to any one of claims 1 to 6, wherein the workpiece is irradiated with the laser through a photomask.

8. The laser processing method according to any one of claims 1 to 7, wherein the processing is performed while relatively scanning the laser relative to the workpiece.

9. The laser processing method according to any one of claims 1 to 8, wherein ablation processing is performed.

10. The laser processing method according to any one of claims 1 to 9, wherein the recess and/or the through hole having a width of 20 µm or less is formed.

11. The laser processing method according to any one of claims 1 to 10, wherein as the recess and/or the through hole, the recess and/or the through hole is formed such that a ratio of a processed portion height to a width of a bottom of the recess or a width of a lower end opening of the through hole is 1.0 or more.

12. The laser processing method according to any one of claims 1 to 11, wherein the recess is formed such that a width of a bottom of the recess is 70% or more of an opening width of the recess in an initial processed surface of the workpiece, and/or
the through hole is formed such that a width of a lower end opening of the through hole is 70% or more of a width of an upper end opening of the through hole in the initial processed surface.

13. The laser processing method according to any one of claims 1 to 12, wherein a plurality of the recesses are formed, and a distance between bottoms of the recesses adjacent to each other is 110% or less of a width of the bottom.

14. The laser processing method according to any one of claims 1 to 13, wherein the processing is performed while the laser is being imaged on the workpiece surface of the workpiece.

15. The laser processing method according to any one of claims 1 to 13, wherein the workpiece is irradiated with the laser through a photomask, and
the laser is imaged on a film surface formed on the photomask.

16. A method for manufacturing a substrate having a recess and/or a through hole, wherein the recess and/or the through hole is formed in a substrate as the workpiece by the laser processing method according to any one of claims 1 to 15.

17. A laser processing apparatus for forming a recess and/or a through hole in a workpiece using a laser, the laser processing apparatus comprising:
a laser source that oscillates a laser; and
a shaping optical system configured to irradiate the workpiece with the laser having an optical axis inclined with respect to a normal of a workpiece surface of the workpiece and to rotate the optical axis of the laser around the normal of the workpiece surface as a rotation axis.

18. A laser processing apparatus for forming a recess and/or a through hole in a workpiece using a laser, the laser processing apparatus comprising:
a laser source that oscillates a laser; and
a wobble device configured to convert the laser into a wobble laser.

19. The laser processing apparatus according to claim 18, further comprising a shaping device that shapes an energy distribution of the laser emitted from the laser source, and wherein the wobble device is provided between the laser source and the shaping device.

20. The laser processing apparatus according to claim 18 or 19, wherein the wobble device includes a galvanometer scanner.

21. The laser processing apparatus according to any one of claims 18 to 20, wherein the wobble device includes a rotation mechanism configured to rotate a prism.

22. The laser processing apparatus according to any one of claims 17 to 21, comprising an excimer laser oscillator as the laser source.

23. The laser processing apparatus according to any one of claims 17 to 22, further comprising an optical system configured to image the laser on a workpiece surface of the workpiece.

24. The laser processing apparatus according to any one of claims 17 to 22, further comprising:
a stage on which the workpiece is placed; and
a photomask provided between the shaping optical system and the stage.

25. The laser processing apparatus according to claim 24, further comprising an optical system configured to image the laser on a film surface formed on the photomask.

26. The laser processing apparatus according to claim 24 or 25, further comprising a controller configured to move the workpiece placed on the stage and the photomask in synchronization with each other.
